**Europäisches Patentamt**

**European Patent Office**

**Office européen des brevets**

(19)

(11) Veröffentlichungsnummer: **0 075 286**
**B1**

# (12)  EUROPÄISCHE PATENTSCHRIFT

(45) Veröffentlichungstag der Patentschrift:
21.11.84

(51) Int. Cl.³: **A 21 D  2/14**

(21) Anmeldenummer: **82108575.0**

(22) Anmeldetag: **17.09.82**

(54) **Verfahren zum Konservieren von mit Hefe und/oder Sauerteig getriebenen Backwaren mit Sorbinsäure.**

(30) Priorität: **22.09.81  DE 3137559**

(43) Veröffentlichungstag der Anmeldung:
**30.03.83 Patentblatt 83/13**

(45) Bekanntmachung des Hinweises auf die Patenterteilung:
**21.11.84 Patentblatt 84/47**

(84) Benannte Vertragsstaaten:
**AT BE CH DE FR GB IT LI NL SE**

(56) Entgegenhaltungen:
**FR - A - 2 234 866**

(73) Patentinhaber: **HOECHST AKTIENGESELLSCHAFT,
Postfach 80 03 20, D-6230 Frankfurt am Main 80 (DE)**

(72) Erfinder: **Lück, Erich, Dr., Robert-Stolz-Strasse 102,
D-6232 Bad Soden am Taunus (DE)**
Erfinder: **Remmert, Karlheinz, Krifteler Strasse 3,
D-6238 Hofheim am Taunus (DE)**

**Beschreibung**

Die Konservierung von Brot und anderen Backwaren gegen Schimmelbefall durch Zusatz antimikrobiell wirksamer Substanzen, z. B. Propionaten oder Sorbinsäure, zum Teig ist im Prinzip bekannt. Dieser Zusatz wird in der Praxis dann problematisch, wenn die Teiglockerung mit Hilfe von Hefe oder Sauerteig vorgenommen wird. Alle antimikrobiell wirksamen Stoffe, in der Praxis Schimmelschutzmittel genannt, hemmen nämlich die Tätigkeit der Gärhefen und des Sauerteigs. Es ist bekannt, daß die gärhemmende Wirkung von grobkristalliner Sorbinsäure wesentlich geringer ist als die der für andere Zwecke der Lebensmittelkonservierung eingesetzten relativ feinkristallinen Säure. So wird in der deutschen Patentschrift 2 333 142 beschrieben, daß eine Sorbinsäure mit einer Korngröße zwischen 100 und 1000 μm, vorzugsweise zwischen 200 und 800 μm, nach Zusatz zum Teig sich besonders günstig verhält. Eine solche Sorbinsäure hat eine geringere gärhemmende Wirkung als feinkörnigere Säure, dagegen ist die Wirkung gegen Schimmel etwa gleich.

Es wurde nun überraschenderweise gefunden, daß die gewünschte Wirkung der Sorbinsäure, nämlich geringe Gärhemmung bei gutem antimikrobiellem Effekt, noch wesentlich besser ist, wenn die Korngröße zwischen etwa 200 und 600 μm liegt und die Anteile der verschiedenen Korngrößen dabei in bestimmter Weise begrenzt sind.

Das erfindungsgemäße Verfahren zum Konservieren von mit Hefe und/oder Sauerteig getriebenen Backwaren durch Zusatz von grobkörniger Sorbinsäure zum Mehl oder Teig vor dem Backprozeß ist dadurch gekennzeichnet, daß man eine Sorbinsäure verwendet, deren Korngröße im wesentlichen zwischen 200 und 600 μm liegt, wobei für die Anteile der verschiedenen Korngrößen folgende Grenzen gelten:

| | |
|---|---|
| <200 μm: | maximal 5 Gew.-% |
| 200–300 μm: | maximal 20 Gew.-% |
| 300–400 μm: | maximal 30 Gew.-% |
| 400–600 μm: | 50–70 Gew.-% |
| >600 μm: | maximal 10 Gew.-%. |

Wesentliche Anteile (mehr als etwa 10 Gew.-%) mit einer Korngröße über 600 μm sind ungünstig, weil sich eine zu grobkörnige Sorbinsäure während des Backprozesses nicht gleichmäßig in der Backware verteilen würde. Eine solche Sorbinsäure hat keine gute konservierende Wirkung mehr und ist in der Praxis als Schimmelschutzmittel für Brot und andere Backwaren unbrauchbar.

Die erfindungsgemäße Sorbinsäure kann entweder zuvor mit dem Mehl vermischt werden oder während der Teigbereitung zusammen mit Backhilfsmitteln und den anderen Zutaten eingearbeitet werden. Dabei tritt automatisch eine gute Verteilung ein.

Die zur Schimmelverhütung von Brot und anderen Backwaren ausreichende Menge an Sorbinsäure liegt im allgemeinen zwischen 0,1 und 0,3 Gew.-%, bezogen auf die Mehlmenge. Die Sorbinsäure der erfindungsgemäßen Korngröße hat keinen unerwünschten Einfluß auf Teiggärung, Teigausbeute, Teigbeschaffenheit und Gärzeit. Die fertige Backware stimmt in ihren Eigenschaften, wie Bräunung, Krume und Porenbild, mit Kontrollstücken ohne Zusatz von Sorbinsäure überein. Auch Geruch und Geschmack werden durch den Zusatz der erfindungsgemäßen Sorbinsäure nicht beeinflußt.

Die erfindungsgemäße Sorbinsäure läßt sich durch gezielte fraktionierte Kristallisation, z. B. aus konzentrierten wäßrigen Natriumacetatlösungen, oder durch Kristallisation mit anschließender Fraktionierung, z. B. durch Aussieben oder mit Hilfe eines Windsichters herstellen.

Beispiele

Es wurden die folgenden Sorbinsäure-Typen eingesetzt:

| Sorbinsäure-Typ | Anteile der verschiedenen Korngrößen (in Gew.-%) | | | | |
|---|---|---|---|---|---|
| | <200 μm | 200 bis 300 μm | 300 bis 400 μm | 400 bis 600 μm | >600 μm |
| 1 | 1% | 70% | 15% | 13% | 1% |
| 2 | 1% | 30% | 40% | 27% | 2% |
| 3 | 1% | 20% | 29% | 50% | 0% |
| 4 | 1% | 10% | 19% | 70% | 0% |
| 5 | 1% | 20% | 30% | 47% | 2% |

(Fortsetzung)

| Sorbinsäure-Typ | Anteile der verschiedenen Korngrößen (in Gew.-%) | | | | |
|---|---|---|---|---|---|
| | < 200 μm | 200 bis 300 μm | 300 bis 400 μm | 400 bis 600 μm | > 600 μm |
| 6 | 1% | 10% | 20% | 66% | 3% |
| 7 | 1% | 5% | 15% | 68% | 11% |
| 8 | 0% | 0% | 10% | 60% | 30% |

<div align="center">

Beispiel 1
(Teiggärung)

</div>

Zusammensetzung des Teiges:
37,5 g Weizenmehl, 42,5 g Wasser, 1 g Hefe, 0,6 g Salz, 0,2 g Zucker und 0,075 g Sorbinsäure der verschiedenen Typen (außer im Kontrollversuch).

Kneten: 5 Minuten, Gärzeit: 60 Minuten, Temperatur: 30°C.

Kriterium für die Teiggärung war die Zunahme des Teigvolumens im 250-ml-Meßzylinder. Dabei hat sich folgendes ergeben:

| Sorbinsäure-Typ | Zunahme des Teig-volumens nach 1 Stunde | Gärhemmung (berechnet auf Teig ohne Sorbinsäure-Zusatz gemäß Kontrollversuch) |
|---|---|---|
| 1 | 44 ml | 45,0% |
| 2 | 56 ml | 30,0% |
| 3 | 68 ml | 15,0% |
| 4 | 70 ml | 12,5% |
| 5 | 71 ml | 11,3% |
| 6 | 73 ml | 8,8% |
| 7 | 74 ml | 7,5% |
| 8 | 79 ml | 1,3% |
| Kontrollversuch ohne Sorbinsäure | 80 ml | 0% |

## Beispiel 2
(Backversuch)

Es wurde Kastenbrot nach folgender Rezeptur gebacken:

| | |
|---|---|
| Weizenmehl (Typ 405) | 450,0 g |
| Wasser | 270,0 g |
| Margarine | 22,5 g |
| Hefe | 12,0 g |
| Salz | 7,0 g |
| Zucker | 2,7 g |
| Sorbinsäure (außer im Kontrollbrot) | 0,9 g |

Knetzeit: 7 Minuten, Teigtemperatur: 30° C, Stückgare: 60 Minuten, Backzeit: 60 Minuten, Backtemperatur: 220° C.

Nach der Stückgare wurde das Teigvolumen, bzw. nach dem Backen das Brotvolumen, wie folgt beurteilt (in Relation zu dem beim Kontrollbrot erreichten Normalwert):

| Sorbinsäure-Typ | Teigvolumen | Brotvolumen |
|---|---|---|
| 1 | ca. $^1/_2$ des Normalwertes | deutlich geringer als Normalwert |
| 2 | etwa $^2/_3$ des Normalwertes | wesentlich geringer als Normalwert |
| 3 | fast Normalwert | fast Normalwert |
| 4 | fast Normalwert | fast Normalwert |
| 5 | fast Normalwert | Normalwert (ohne Gärhemmung) |
| 6 | Normalwert (ohne Gärhemmung) | Normalwert (ohne Gärhemmung) |
| 7 | Normalwert (ohne Gärhemmung) | Normalwert (ohne Gärhemmung) |
| 8 | Normalwert (ohne Gärhemmung) | Normalwert (ohne Gärhemmung) |
| Kontrollbrot ohne Sorbinsäure | Normalwert (ohne Gärhemmung) | Normalwert (ohne Gärhemmung) |

## Beispiel 3
(Haltbarkeit)

Von den Versuchsbroten in Beispiel 2 wurden je 10 Scheiben abgeschnitten und einzeln in Polyethylenbeutel eingeschweißt. Bei der Lagerung im Labor bei 25 — 30° C hat sich folgendes ergeben:

| Versuchsbrot mit Sorbinsäure-Typ | Ausmaß des Schimmelbefalls nach einer Lagerzeit von | | | | |
|---|---|---|---|---|---|
| | 1 Woche | 2 Wochen | 3 Wochen | 4 Wochen | 5 Wochen |
| 1 | — | — | — | — | + |
| 2 | — | — | — | — | + |
| 3 | — | — | — | — | + |
| 4 | — | — | — | — | + |

(Fortsetzung)

| Versuchsbrot mit Sorbinsäure-Typ | Ausmaß des Schimmelbefalls nach einer Lagerzeit von | | | | |
|---|---|---|---|---|---|
| | 1 Woche | 2 Wochen | 3 Wochen | 4 Wochen | 5 Wochen |
| 5 | — | — | — | — | + |
| 6 | — | — | — | — | + |
| 7 | — | — | — | + | + + |
| 8 | — | + | + + | + + + | |
| Kontrollbrot ohne Sorbinsäure | + + | + + + | | | |

Zeichenerklärung:
—      kein Schimmelbefall
+      maximal 20% der Packungen verschimmelt
+ +      etwa die Hälfte der Packungen verschimmelt
+ + +      mehr als 80% der Packungen verschimmelt

## Patentanspruch

Verfahren zum Konservieren von mit Hefe und/oder Sauerteig getriebenen Backwaren durch Zusatz von grobkörniger Sorbinsäure zum Mehl oder Teig vor dem Backprozeß, dadurch gekennzeichnet, daß man eine Sorbinsäure verwendet, deren Korngröße im wesentlichen zwischen 200 und 600 µm liegt, wobei für die Anteile der verschiedenen Korngrößen folgende Grenzen gelten:

| | |
|---|---|
| < 200 µm: | maximal 5 Gew.-% |
| 200—300 µm: | maximal 20 Gew.-% |
| 300—400 µm: | maximal 30 Gew.-% |
| 400—600 µm: | 50—70 Gew.-% |
| > 600 µm: | maximal 10 Gew.-%. |

## Claim

A process for preserving yeast- and/or sourdoughfermented bakery products by addition of coarse-grain sorbic acid to the flour or dough before baking, characterized using a sorbic acid the grain size of which is substantially in the range of from 200 to 600 microns; the proportion of the different grain sizes being limited as follows:

| | |
|---|---|
| < 200 µm: | 5 weight % at most |
| 200—300 µm: | 20 weight % at most |
| 300—400 µm: | 30 weight % at most |
| 400—600 µm: | 50—70 weight % at most |
| > 600 µm: | 10 weight % at most. |

**Revendication**

Procédé pour la conservation de produits boulangers, levés par de la levure et/ou du levain, par addition à la farine ou à la pâte, avant la cuisson, d'acide sorbique à granulométrie grossière, caractérisé en ce qu'on utilise un acide sorbique dont la granulométrie est essentiellement comprise entre 200 et 600 µm, les quantités des différentes fractions granulométriques présentant les limitations suivantes:

| | |
|---|---|
| < 200 µm: | maximum 5% en poids |
| 200 – 300 µm: | maximum 20% en poids |
| 300 – 400 µm: | maximum 30% en poids |
| 400 – 600 µm: | 50 – 70% en poids |
| > 600 µm: | maximum 10% en poids. |